(19) Europäisches Patentamt

European Patent Office

Office européen des brevets

(11) **EP 1 736 796 A1**

(12) **EUROPÄISCHE PATENTANMELDUNG**

(43) Veröffentlichungstag:
**27.12.2006 Patentblatt 2006/52**

(51) Int Cl.:
*G01S 7/52* (2006.01)   *G01S 15/87* (2006.01)
*G01S 7/292* (2006.01)

(21) Anmeldenummer: **06113282.5**

(22) Anmeldetag: **28.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **15.06.2005 DE 102005027643**

(71) Anmelder: **ROBERT BOSCH GMBH**
**70442 Stuttgart (DE)**

(72) Erfinder: **Stelzig, Wolfgang**
**71638 Ludwigsburg (DE)**

(54) **Vorrichtung zur Bestimmung des Abstandes eines Fahrzeuges zu einem Objekt sowie Verfahren zur Bestimmung des Abstandes von Sende- und Empfangsmitteln zueinander**

(57) Es wird eine Vorrichtung zur Bestimmung des Abstandes eines Fahrzeugs (2) zu einem Objekt (1) mit mindestens zwei Sende- und Empfangsmittel (3, 4, 5) zum Aussenden eines Signals und Empfangen von vom Objekt zurückgeworfenen Echos sowie einer Elektronikeinheit vorgeschlagen, die dazu ausgestaltet ist, anhand des Empfangssignals von zumindest einem zurückgeworfenen Echo einen Abstand ($d_1$, $d_2$, k, x, y) zu ermitteln. Erfindungsgemäß ist die Elektronikeinheit dazu ausgestaltet, für insbesondere die Berechnung des Abstandes (x, y) von Sende- und Empfangsmittel zueinander, Empfangssignale zurückgeworfener Echos bei verschiedenen Empfindlichkeiten der Sende- und Empfangsmittel sowie einem konstanten Abstand zum Objekt (1) zu erfassen und die bei verschiedenen Empfindlichkeiten aufgenommene Empfangssignale einer Mittelwertbildung zu unterziehen. Außerdem wird ein Verfahren zur Bestimmung des Abstandes (x, y) von wenigstens zwei Sende- und Empfangsmittel vorgeschlagen.

Fig. 1

**Beschreibung**

Die Erfindung betrifft eine Vorrichtung zur Bestimmung des Abstandes eines Fahrzeuges zu einem Objekt nach dem Oberbegriff des Anspruchs 1 sowie ein Verfahren zur Bestimmung des Abstandes von wenigstens zwei Sende- und Empfangsmittel nach dem Oberbegriff des Anspruchs 4.

Stand der Technik

Aus der deutschen Offenlegungsschrift DE-A-101 38 001 A1 ist eine Echosignalüberwachungsvorrichtung mit einer Mehrzahl von Sende- und Empfangseinheiten zum Aussenden von Signalen und Empfangen der von einem externen Gegenstand zurückgeworfenen Echos bekannt. Die Vorrichtung umfasst eine Auswerteeinheit zum Abschätzen der Entfernung von der Überwachungsvorrichtung zu dem externen Objekt anhand der empfangenen Echos. Außerdem weist sie einen Betriebszustand zum Berechnen der relativen Position der Sende- und Empfangseinheiten zueinander anhand der zurückgeworfenen Echos auf.

Um eine Verbesserung der Genauigkeit für die Abstandsbestimmung zwischen der Sende- und Empfangseinheit zu erzielen, werden Echolaufzeiten wiederholt gemessen und zur Berechnung des Abstandes eine Mittelung über die wiederholten Messungen vorgenommen. Die Echosignalüberwachungsvorrichtung kann dabei bevorzugt während der Durchführung dieser Messungen langsam bewegt werden.

Aufgabe und Vorteile der Erfindung

Der Erfindung liegt die Aufgabe zugrunde, den Abstand von Sende- und Empfangsmittel zueinander bei zumindest gleich bleibender Genauigkeit einfacher erfassen zu können.

Diese Aufgabe wird durch die Merkmale der Ansprüche 1 und 4 gelöst.

In den abhängigen Ansprüchen sind vorteilhafte und zweckmäßige Weiterbildungen der Erfindung angegeben.

Zunächst geht die Erfindung von einer Vorrichtung zur Bestimmung des Abstandes eines Fahrzeugs zu einem Objekt mit wenigstens zwei Sende- und Empfangsmittel zum Aussenden eines Signals und Empfangen von vom Objekt zurückgeworfenen Echos und einer Elektronikeinheit aus, die dazu ausgebildet ist, anhand des Empfangssignals von zumindest einem zurückgeworfenen Echo einen Abstand zwischen Objekt und Fahrzeug zu ermitteln.

Der wesentliche Aspekt der Erfindung liegt nun darin, dass die Elektronikeinheit ausgestaltet ist, für insbesondere die Berechnung des Abstandes von Sende- und Empfangsmittel zueinander Empfangssignale zurückgeworfener Echos bei verschiedenen Empfindlichkeiten der Sende- und Empfangsmittel für einen gleichen Abstand zu einem Objekt zu erfassen und die Empfangssignale einer Mittelwertbildung zu unterziehen.

Um eine Verbesserung durch Mittelwertbildung zu erreichen, muss dafür gesorgt werden, dass die Messungen in einer definierten Art und Weise um einen exakten Mittelwert streuen. Eine Möglichkeit ist, wie in der DE 101 38 001 A1 vorgeschlagen, die Sensoren leicht vor und zurück zu bewegen. Dies ist allerdings in der Praxis nur schwer realisierbar. Der Erfindung liegt die Erkenntnis zugrunde, dass man den gleichen Effekt auch erreichen kann, indem man die Empfindlichkeit der Sensoren beim Empfang der zurückgeworfenen Echos, zum Beispiel Ultraschallechos, verändert. Dies führt dazu, dass verschiedene Höhen eines empfangenen Pulsverlaufes als Messwert herangezogen werden, wodurch eine gewünschte definierte Streuung der Messwerte eintritt.

In einer besonders bevorzugten Ausgestaltung ist für die Veränderung der Empfindlichkeit der Sende- und Empfangsmittel eine Triggerschwelle einstellbar. Dies kann so aussehen, dass eine interne Schaltung, die ein analoges Empfangssignal in ein digitales umwandelt, mit einer einstellbaren Schwelle triggerbar ist.

Obgleich der Abstand bei der Messung zu einem Objekt sich nicht verändert, wird vorzugsweise eine entfernungsabhängige Empfmdlichkeitskennlinie geladen, die für jede Messentfernung die Empfindlichkeit des Sensors und damit die Höhe einer Triggerschwelle definiert. Führt man diese Vorgehensweise bei gleich bleibendem Abstand der Sende- und Empfangsmittel durch, erhält man unterschiedliche Empfindlichkeiten der Sende- und Empfangsmittel. Durch das Messen bei verschiedenen Empfindlichkeiten lässt sich die erwünschte Streuung der Messwerte erreichen. Auf diese Messwerte lässt sich eine Mittelwertbildung bekannter Art anwenden, wodurch insbesondere im Vergleich zu einer Mittelwertbildung bei gleich bleibender Empfindlichkeit eine drastische Erhöhung der Genauigkeit realisierbar ist.

Durch diese Vorgehensweise kann für eine Vorrichtung zur Bestimmung des Abstandes eines Fahrzeugs zu einem Objekt, die keine genaueren Messungen als 1 Zentimeter zulässt, was bei einer Abstandsbestimmung von Sensoren zueinander zu Fehlern von vielen Zentimetern führt, eine Auflösung im Millimeterbereich erreicht werden.

Bei stillstehenden Zielen und entsprechendem Zeitaufwand lässt sich hierdurch auch eine herkömmliche Abstandsbestimmung entsprechend verfeinern.

Bei einem Verfahren zur Bestimmung des Abstandes von wenigstens zwei Sende- und Empfangsmittel, insbesondere einer Vielzahl von Sende- und Empfangsmittel für vorzugsweise eine Vorrichtung zur Erfassung des Abstandes eines Fahrzeuges zu einem Objekt, bei welchem ein Abstand, insbesondere der Sende- und Empfangsmittel zueinander anhand der Empfangssignale von zurückgeworfenen Echos ermittelt wird, liegt der Kerngedanke darin, dass Signale zurückgeworfener Echos mit verschiedenen Empfindlichkeiten der Sende- und Empfangsmittel bei einem konstanten Abstand zu einem Objekt erfasst und die Signale einer Mittelwertbildung unterzogen werden. Durch die Messung bei verschiedenen Empfindlichkeiten wird eine Streuung der Messwerte erreicht, die nach einer Mittelwertbildung einen Messwert mit vergleichsweise deutlich höherer Genauigkeit liefert.

Zeichnungen

Die Erfindung ist in Zeichnungen dargestellt und wird nachfolgend unter Angabe weiterer Vorteile und Einzelheiten näher erläutert. Es zeigen

Figur 1    in einer schematisierten Teilansicht ein vor einer Wand positioniertes Fahrzeug mit Abstandssensoren für die Bestimmung des Abstandes zwischen den Sensoren und

Figur 2    den zeitlichen Verlauf einer Signalamplitude eines Abstandssensorsignals.

Beschreibung der Ausffihrunmsbeis-Piel

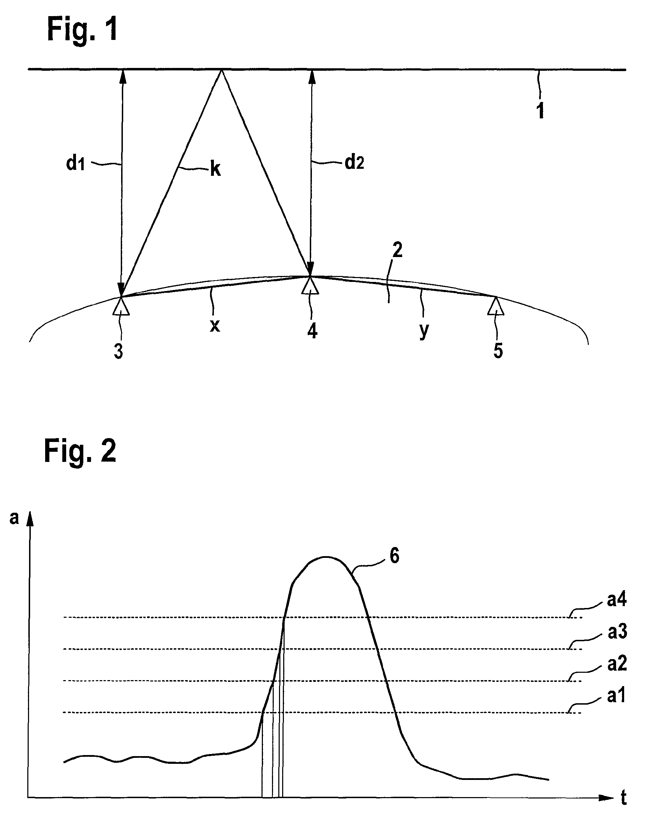

In Figur 1 ist in stark schematisierter Darstellung in Draufsicht eine Wand 1 dargestellt, vor welcher ein Fahrzeug 2 (nur die Frontpartie ist abgebildet) mit Sensoren 3, 4, 5 positioniert ist. Die Sensoren 3, 4, 5 sind beispielsweise in der Lage, ein Signal, z. B. ein Ultraschallsignal auszusenden und können ein Echo des gleichen Sensors oder eines benachbarten Sensors empfangen.

Die Bestimmung der Sensorabstände x, y ist für nebeneinander liegende Sensoren 1, 2 bzw. 2, 3 durch Auswertung von empfangenen Direkt- und Kreuzechos theoretisch leicht möglich, wenn das Fahrzeug vor der geraden Wand 1 entsprechend Figur 1 steht.

Figur 1 zeigt die Situation beispielhaft für ein System mit drei Sensoren 3, 4, 5, wobei der Abstand x zwischen den Sensoren 3 und 4 bestimmt wird.

Durch geläufige geometrische Überlegungen lässt sich folgende Formel herleiten:

$$x = 2\sqrt{k^2 - d_1 d_2}$$

x ist dabei der gesuchte Abstand. k stellt die halbe Kreuzechostrecke dar und $d_1$ bzw. $d_2$ sind jeweils halbe Direktechostrecken.

Aus den ermittelten Werten $d_1$, $d_2$ sowie k kann vergleichsweise einfach der Abstand x berechnet werden.

Es hat sich allerdings herausgestellt, dass diese Vorgehensweise mit einem schweren Nachteil behaftet ist. Bei Messfehlern der Echolaufzeiten zur Bestimmung von Echolaufstrecken kommt es zu großen Abweichungen einer berechneten Strecke x. Beispielsweise ergibt ein Fehler einer Echolaufstrecke von 1 Zentimeter eine Abweichung des Sensorabstandes um bis zu 7 Zentimetern. Bei Messfehlern in mehr als einer Echostrecke erhöht sich diese Abweichung entsprechend, so dass noch deutlich höhere Fehler zustande kommen können. Dadurch wird das Ergebnis der berechneten Strecke x praktisch unbrauchbar.

Auch eine Mehrfachmessung mit einer entsprechenden Mittelwertbildung liefert nicht die gewünschte Genauigkeitserhöhung, solange alle Randbedingungen bei der Messung gleich bleiben. Denn eine Verbesserung des Ergebnisses durch Mittelwertbildung ist nur dann erreichbar, wenn die Einzelmessungen voneinander abweichen und um den theoretisch richtigen Wert schwanken.

Dies wird dadurch erreicht, indem die Empfmdlichkeit der Sensoren 3, 4, 5 beim Empfangen verändert wird.

In Figur 2 ist ein herkömmlicher Verlauf der Amplitude a eines Sensorsignals 6 über die Zeit t dargestellt.

Für die Bestimmung der Laufzeit eines Echos wird der Zeitpunkt definiert, an welchem das Sensorsignal 6 einen vorgegebenen Amplitudenwert überschreitet.

Bei einer Änderung der Empfmdlichkeit werden unterschiedliche Amplitudenwerte herangezogen. Ist eine große Empfindlichkeit eingestellt wird die Laufzeit bereits bei vergleichsweise kleinen Amplituden angehalten, wogegen bei einer geringen Empfindlichkeit ein vergleichsweise großer Amplitudenausschlag erforderlich ist, um die Zeit für die Laufzeitbestimmung des Echos anzuhalten.

Dieser Umstand kann genutzt werden, um bei einem konstanten Abstand eines Fahrzeugs 2 zu einer Wand 1 eine Streuung der Messwerte um einen tatsächlichen Abstandswert zu erhalten, der dann durch eine Mittelwertbildung der streuenden Messwerte angenähert werden kann.

In Figur 2 wird bei vier Amplitudenwerten a1, a2, a3, a4 die Laufzeit der Echos zur Bestimmung der Entfernungen $d_1$, $d_2$ und k gemessen. Aus beispielhaft jeweils vier Messungen wird ein Mittelwert für $d_1$, $d_2$ sowie k bestimmt. Daraus lässt sich dann mit einer gewünschten Genauigkeit der Abstand x der Sensoren 3 und 4 oder auch der Abstand y der Sensoren 4 und 5 durch eine entsprechende Messung berechnen.

In der Praxis hat sich ein Abstand eines Fahrzeugs 2 von einer Wand 1 im Bereich von 40 bis 60 cm bewährt, um eine Bestimmung der Werte x und y auf der Grundlage der erfindungsgemäßen Vorgehensweise vornehmen zu können.

**Patentansprüche**

1.  Vorrichtung zur Bestimmung des Abstandes eines Fahrzeuges (2) zu einem Objekt (1) mit wenigstens zwei Sende- und Empfangsmittel (3, 4, 5) zum Aussenden eines Signals und Empfangen von vom Objekt (1) zurückgeworfenen Echos sowie einer Elektronikeinheit, die dazu ausgestaltet ist, anhand des Empfangssignals von zumindest einem zurückgeworfenen Echo einen Abstand ($d_1$, $d_2$, k, x, y) zu ermitteln, **dadurch gekennzeichnet, dass** die Elektronikeinheit ausgestaltet ist, für insbesondere die Berechnung des Abstandes von Sende- und Empfangsmittel zueinander, Empfangssignale zurückgeworfener Echos bei verschiedenen Empfindlichkeiten der Sende- und Empfangsmittel sowie einem konstanten Abstand zum Objekt (1) zu erfassen und die bei verschiedenen Empfindlichkeiten aufgenommenen Empfangssignale einer Mittelwertbildung zu unterziehen.

2. Vorrichtung nach Anspruch 1, **dadurch gekennzeichnet, dass** für die Veränderung der Empfindlichkeit der Sende- und Empfangsmittel (3, 4, 5) eine Triggerschwelle einstellbar ist.

3. Vorrichtung nach Anspruch 1 oder 2, **dadurch gekennzeichnet, dass** die Elektronikeinheit ausgebildet ist, für die Messung bei gleichem Abstand mit verschiedenen Empfindlichkeiten die Empfindlichkeiten für verschiedene Abstände zugrunde zu legen.

4. Verfahren zur Bestimmung des Abstandes von wenigstens zwei Sende- und Empfangsmittel (3, 4, 5) vorzugsweise einer Vorrichtung zur Erfassung des Abstandes eines Fahrzeugs zu einem Objekt, insbesondere nach einem der vorhergehenden Ansprüche, bei welchem ein Abstand (x, y), insbesondere von Sende- und Empfangsmittel (3, 4, 5) zueinander anhand der Empfangssignale von zurückgeworfenen Echos ermittelt wird, **dadurch gekennzeichnet, dass** die Empfangssignale zurückgeworfener Echos bei verschiedenen Empfindlichkeiten der Sende- und Empfangsmittel (3, 4, 5) bei einem konstanten Abstand zu einem Objekt erfasst und die Empfangssignale einer Mittelwertbildung unterzogen werden.

5. Verfahren nach Anspruch 4, **dadurch gekennzeichnet, dass** die Empfindlichkeiten der Sende- und Empfangsmittel über die Einstellung einer Triggerschwelle verändert werden.

6. Verfahren nach Anspruch 4 oder 5, **dadurch gekennzeichnet, dass** für die Messung bei gleichbleibendem Abstand mit verschiedenen Empfmdlichkeiten die Empfindlichkeiten für verschiedene Abstände herangezogen werden.

# Fig. 1

# Fig. 2

**Europäisches Patentamt**

# EUROPÄISCHER RECHERCHENBERICHT

Nummer der Anmeldung

EP 06 11 3282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 101 38 001 A1 (ROBERT BOSCH GMBH) 20. Februar 2003 (2003-02-20) * das ganze Dokument * ----- | 1-6 | INV. G01S7/52 G01S15/87 G01S7/292 |
| A | EP 1 295 754 A (VALEO SCHALTER UND SENSOREN GMBH) 26. März 2003 (2003-03-26) * Zusammenfassung * * Absätze [0005] - [0011] * * Absätze [0016], [0017] * ----- | 1-6 | |
| A | US 4 542 489 A (NARUSE ET AL) 17. September 1985 (1985-09-17) * Zusammenfassung * * Spalte 2, Zeile 25 - Zeile 54 * * Spalte 3, Zeile 63 - Zeile 67 * * Spalte 4, Zeile 31 - Zeile 33 * * Spalte 6, Zeile 5 - Zeile 32 * ----- | 1-6 | |
| A | US 2004/189514 A1 (SCHLICK MICHAEL ET AL) 30. September 2004 (2004-09-30) * Zusammenfassung * * Absätze [0013] - [0020] * * Absätze [0023] - [0026] * * Absätze [0035], [0036] * ----- | 1-6 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 10. Oktober 2006 | Lupo, Emanuela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 06 11 3282

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2006

| Im Recherchenbericht angeführtes Patentdokument | Datum der Veröffentlichung | Mitglied(er) der Patentfamilie | Datum der Veröffentlichung |
|---|---|---|---|
| DE 10138001 A1 | 20-02-2003 | WO 03016941 A2<br>EP 1417509 A2<br>US 2005052950 A1 | 27-02-2003<br>12-05-2004<br>10-03-2005 |
| EP 1295754 A | 26-03-2003 | DE 10146249 A1 | 17-04-2003 |
| US 4542489 A | 17-09-1985 | KEINE | |
| US 2004189514 A1 | 30-09-2004 | WO 02095443 A1<br>DE 10124909 A1<br>EP 1395846 A1<br>JP 2004526976 T | 28-11-2002<br>19-12-2002<br>10-03-2004<br>02-09-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10138001 A1